# EUROPEAN PATENT SPECIFICATION

(11) **EP 1 678 569 B1**
(45) Date of publication and mention of the grant of the patent: **13.08.2008**
(21) Application number: 04770303.8
(22) Date of filing: 21.10.2004
(51) Int. Cl.: G06F 1/00

(54) **DIGITAL RIGHTS MANAGEMENT UNIT FOR A DIGITAL RIGHTS MANAGEMENT SYSTEM**
VERWALTUNGSEINHEIT FÜR DIGITALE RECHTE FÜR EIN VERWALTUNGSSYSTEM FÜR DIGITALE RECHTE
UNITE DE GESTION DE DROITS D'UTILISATION ELECTRONIQUE POUR UN SYSTEME DE GESTION DE DROITS D'UTILISATION ELECTRONIQUE

(30) Priority: 22.10.2003 EP 03103902
(43) Date of publication of application: 12.07.2006
(73) Proprietor: NXP B.V., 5656 AG Eindhoven (NL)
(72) Inventor: PRZYBILLA, Henrik, A-1101 Vienna (AT)
(86) International application number: PCT/IB2004/052163
(87) International publication number: WO 2005/041001

(56) References cited:
- US-A1- 2003 079 133

## Description

The present invention relates to a digital rights management (DRM) user unit for interacting with DRM client units and DRM server units of a DRM system, said DRM client units storing digital data objects and said DRM server units issuing digital rights objects representing usage rights of associated digital data objects.

The invention relates further to a DRM client unit, a DRM system and a DRM method. The application area of the invention is the distribution and the management of digital rights objects used for the representation of the permission of the use of digital data objects in digital rights managements systems.

Digital Rights Management (DRM) is used in consumer devices and PCs, the DRM client units (often also called target systems), to restrict the use of digital data in order to safeguard the interests of the content owners. For instance, the ability to copy the digital data can be restricted or the number of times the digital data can be used can be limited. In addition, other restrictions like expiration times of usage rights can be employed by DRM systems. DRM systems feature a wide variety of measures to prevent non-authorized use of digital data. One area of particular interest for the consumer electronics industry is the introduction of Digital Rights Objects (DRO) for digital data that is distributed electronically. The DRO is a digital file that represents the permission to use a specific Digital Data Object (DDO) and that contains all restrictions of the use of the DDO.

The DRO is used by a DRM client in the DRM client units to apply the rules and limits that the content owner stipulates for the use of the DDO. The security of the system depends exceptionally on the trustworthiness of the DRM clients. A conventional DRM system sets up a relationship between a DRO and one particular DRM client so that the DDO that is associated with the DRO can only be used by one particular DRM client. This represents a very severe restriction for the purchaser of the DRO: since the DRM client is located in one particular device (i.e. one particular DRM client unit or target system, such as one particular PC), the DRO can not be used with any other equipment.

US 2001/0029581 Al discloses a system for providing rights controlled access to digital media comprises a server data processor and a client data processor connected by a communications network. The user data processor provides access to a data object in accordance with rules associated with the data object by the server data processor. The client data processor comprises a machine key device and a user key device. The machine key device is preferably an installed component of the client data processor that provides encryption, decryption, and authentication functionality for the client data processor. The user key device is preferably a removable, portable device that connects to the client data processor and provides encryption, decryption, and authentication functionality for the user. A method restricts the use of a data object to a particular user and a particular data processor through the use of additional layers of encryption. The method preferably comprises encrypting a data object such that the it can be decrypted by the machine key device, and further encrypting the data object such that it can be decrypted by the user key device. Another method restricts the use of a data object to a particular user and a particular data processor through the use of rules that require authentication of the machine key device and the user key device.

US 2003/0079133 discloses a system which binds the content to a person or any other entity like a company. So duplication of the content and rendering of content is only allowed to a well defined number of devices. The devices used in such a system are provided for playing unencrypted content as well. Thus, users are enabled to play their currently existing audio CDs with the same device.

It is thus an object of the present invention to provide appropriate measures in a DRM system which allow for a safe operation regarding data loss protection and having an anti-theft protection for digital right objects.

This object is achieved according to the present invention by the features according to the independent claims, particularly by the introduction of a DRM user unit as claimed in claim 1 for interacting with DRM client units and DRM server units of a DRM system, said DRM client units storing digital data objects and said DRM server units issuing digital rights objects representing usage rights of associated digital data objects, comprising:
- an authentication unit for authentication of the DRM user unit to a DRM server unit and for authentication of a DRM client unit to the DRM user unit, and
- a rights storage unit for storing digital rights objects received from a DRM server unit, wherein said digital rights objects can be accessed by an authenticated DRM client unit to get usage rights for the usage of an associated digital data object stored on said DRM client unit.

The invention is based on the idea to relocate the authentication of a DRM client to a unit that is possessed by an end user. This unit is called a DRM user unit. The fact that a user based unit is performing the authentication of the DRM client bears the advantage that now a digital rights objects is a personal license that can be used with more than one playback device/playback system while guaranteeing that no illegal copies in any form can be made of the purchased content. A service provider may now implement his own specific software routines in the DRM user unit to authenticate the DRM client running on the DRM client unit of the user.

According to the invention the DRM user unit is the keeper of the DROs that a particular user posses. By use of a handshake scheme between the DRM server of a supplier of DROs and the DRM user unit, the DRM user unit authenticates itself to the DRM server. Further, by use of another handshake scheme between the DRM user unit and the DRM client of a DRM client unit the DRM client authenticates to the DRM user unit.

Thus, DRM administration functionality is set-up in the DRM user unit, which is preferably a portable unit. The DRM user unit is a functional unit that represents a trusted and certified counterpart of a server application that issues digital rights objects. The DRM user unit is adapted for storing the DROs and for authenticating the DRM clients of DRM client units. On request, the DRM user unit enables a trustworthy DRM client to use the DDO that is associated with the DRO stored in the DRM user unit. Before the DRM client is enabled to use the DDO, the DRM client preferably has to successfully authenticate itself to the DRM user unit.

The DRM user unit is an extension of the DRM server application, while this extension is running in the domain of the consumer. The storage of the data and algorithms in the DRM user unit is preferably done in a secured IC. The secured IC is protected against unauthorized read-out and manipulation of the stored data and algorithms. Secured ICs that are suited for DRM user units are e. g. smart card controller.

Further, the present invention relates to a DRM system as claimed in claim 6, comprising :
- DRM client units for storing digital data objects,
- DRM server units for issuing digital rights objects representing usage rights of associated digital data objects, and
- DRM user units for interacting with said DRM client units and said DRM server units comprising:
- an authentication unit for authentication of the DRM user unit to a DRM server unit and for authentication of a DRM client unit to the DRM user unit, and
- a rights storage unit for storing digital rights objects received from a DRM server unit, wherein said digital rights objects can be accessed by an authenticated DRM client unit to get usage rights for the usage of an associated digital data object stored on said DRM client unit.

Still further, the present invention relates to a DRM method for use in a DRM system, as claimed in claim 7, said method comprising the steps of:
- authentication of a DRM user unit to a DRM server unit,
- transfer of a requested digital rights object from said DRM server unit to said DRM user unit after successful authentication,
- authentication of a DRM client unit to said DRM user unit, and
- transfer of usage rights from said DRM user unit to said DRM client unit after successful authentication for the usage of an associated digital data object stored on said DRM client unit.

Preferred embodiments of the invention are defined in the dependent claims.

In a preferred embodiment the DRM user unit further comprises a rights interface unit for receiving digital rights objects from a DRM server unit to which the DRM user unit has authenticated and for granting usage rights for the use of a digital data object stored on an authenticated DRM client unit and associated with a digital rights object stored in said rights storage unit. In this embodiment, the DRM user unit is able to download and manage the DROs by itself. Specifically for the download and the management of the DROs the DRM user unit does not need to be connected to another device, for instance a DRM client unit, than could handle the input and output of DROs. However, in an alternative embodiment of the DRM user unit, no such rights interface is provided.

In a another embodiment the DRM user unit further comprises a revocation list storage unit for storing a revocation list of DRM client units, said revocation list being checked by said authentication unit during authentication of a DRM client unit. Thus, the DRM user unit can check during authentication of a DRM client unit if the DRM client is a valid client or not, and can restrict the access of particular or all DROs stored on the DRM client, if the DRM client is listed in the revocation list.

The data and algorithms in the DRM user unit can be updated during a connection between the DRM user unit and the DRM server of the service provider. This update procedure is preferably protected by cryptographic keys to ensure that only authorised instances are able to carry out changes of the data and algorithms of the DRM user unit. If the DRM user unit is represented by a smart card or uses a smart card IC as authentication unit, the additional smart card security measures ensure that no illicit access to the DRM user unit can be made.

The DRM user unit can be implemented by any portable electronic unit that contains a secure storage unit and processing unit for authentication. Advantageous implementations are a smart card, a PCMCIA card or a mobile terminal, such as a mobile audio and/or video player, a mobile phone or a PDA.

In addition, the DRM user unit can also be configured to function with the same restrictions like the currently known DRM systems. In this case only a particular playback device, an assembly of functionally dependent playback devices or a limited number of playback devices or groups of functionally dependent playback devices can use the digital data object (DDO). Therefore, the digital rights objects include an access information which DRM client units shall get access to a digital rights objects, said access information being checked by the DRM user unit after authentication of a DRM client requesting access to said digital rights object. The limited number of supported DRM clients can, for instance, be determined by the DRM server prior to issuing the DRO to the DRM user unit. In this way the DRM system is flexible to support different operation schemes as defined by the issuer of the digital rights objects.

As an additional feature, backup copies of DROs can be supported. For this feature the DRM user unit can be formed as a unit that has an additional (portable) memory unit inserted. The core information of the main storage unit is backed up in the inserted memory unit. In case the main memory of the DRM user unit is damaged, all information can still be retrieved from the additional memory unit. The additional memory unit can be formed, e.g., by a smart card. While the information in the additional memory is sufficient to determine the rights in the DRM user unit, it is preferably not sufficient to set up a working second DRM user unit with the same rights.

In case that backup copies of the DROs are present, the DRM system can be set up to allow the usage of a DRO in a DRM user unit only, if the memory unit that contains the copy of the DRO is present in the DRM user unit. With this scheme, a backup copy of a DRO featuring internal states is possible. Internal states in a DRO are used to implement, e.g., a limited number of uses of the DDO.

Since the DRM user unit can be stored separately from the additional memory unit, this embodiment can also be used for the prevention of theft of the DROs. If one of the two units that store the DROs are stolen, that unit can not be used. The legitimate owner of the DRO did not transfer a DRO voluntarily and hence it is possible to redistribute an initial DRO to the legitimate owner.

DROs can be either transferable or non-transferable. A transferable DRO can be used with more than one DRM client. The usage rights can optionally be restricted to a fixed set of DRM clients. In contrast, a non-transferable DRO can only be used with one specific DRM client. Thus, according to an aspect of the invention, the digital rights objects include an transfer indicator indicating if a digital rights object is transferable to all DRM client units or not, and the authentication unit is adapted for authenticating the DRM client unit requesting access to a non-transferable digital rights object to the DRM server unit.

The invention will now be explained in more detail with reference to the drawings in which
Fig. 1 shows the layout of a DRM system according to the invention,
Fig. 2 shows the interoperation of a DRM user unit and a DRM server unit,
Fig. 3 shows the interoperation of a DRM user unit and a DRM client unit,
Fig. 4 shows the layout of a DRM system according to the invention with a slightly different interoperation scheme, and
Fig. 5 shows a flow-chart of a DRM method according to the invention.

The currently known systems for a digital rights management feature three main functional entities: a DRM client in a DRM client unit at the customer side, a DRM server at a service provider, which issues the DROs and a content provider that issues the DDOs. The disadvantage of this system from the user perspective is that the DRO issued by the DRM server can be used only by one particular DRM client, and in the presently known systems that the DRM client is assigned to one particular electronic device or to a group of electronic devices that are functionally dependent on each other. In other words, it is an intrinsic feature of the presently known DRM systems, that the DRO that a customer purchases can not be used like a personal license to use the related content on the playback devices of choice. Hence, the content can only be played back on a fixed device, regardless who possess this device. The reason for this is to guarantee that each DRO represents exactly one permission to use the DDO. This guarantees that no "copies" in any form can be made of the purchased content. To assure this, a DRM client is authenticated before a DRO is issued to the DRM client. The authentication of the DRM client includes the checking a revocation list that has registered devices that are reported broken or possibly broken. Based on the authentication data of the DRM client and possible entries in the revocation list, a DRO is issued to the DRM client or the issuing of the DRO to the DRM client is denied.

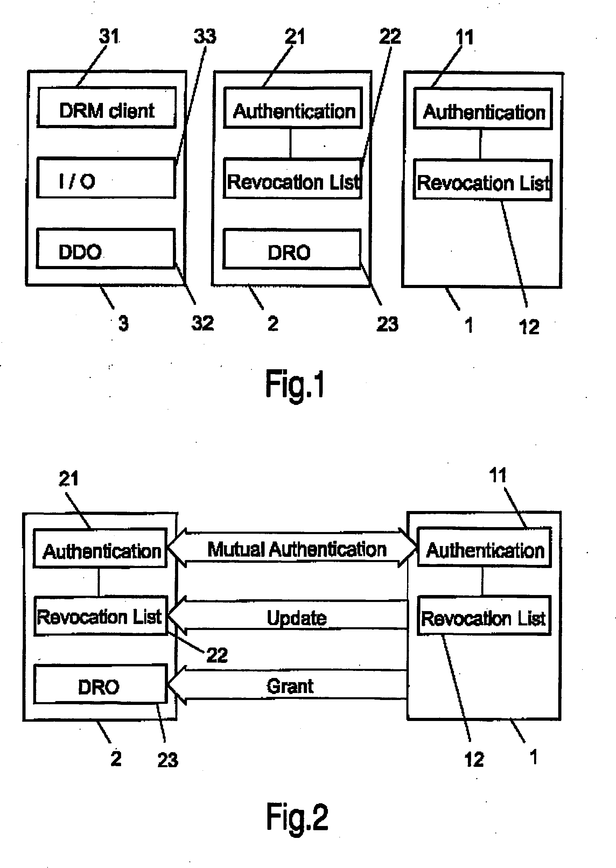

The system set-up of a DRM system featuring a DRM user unit as proposed by the present invention is shown in Fig. 1. The DRM system consists of:
• A DRM server unit 1: this server manages and controls the transfer of digital rights objects into the user domain. The terms and conditions for the sale and use of the DROs are set by the content provider that owns the rights on the digital data objects. The content provider is not considered any further in this document and is not shown in the figure. The DRM server uses an authentication algorithm in an authentication unit 11 to guarantee the identity of the receiver of DROs and a revocation list stored in a revocation list storage 12 to check the integrity of the receiver of DROs.
• A DRM user unit 2: this unit stores the DROs in the user domain in a rights storage unit 23. On the basis of a DRO the DRM user unit 2 controls the use of a digital data object by the DRM client unit 3. For this purpose, the DRM user unit 2 contains an authentication unit 21 for processing an authentication algorithm and a revocation list storage 22. Both elements are provided and maintained by the operator of the DRM server unit 1. If a DRO is released into the user domain, this DRO is stored in the rights storage unit 23.
• A DRM client unit 3: this unit runs a DRM client 31 and uses the DDOs stored in a data storage unit 32 on the basis of the associated DRO that is stored in the DRM user unit 2. In order to get a permission to use the DDO, the DRM client 31 has to authenticate itself to the DRM user unit 2 and has to access or request a DRO therefrom by use of a rights interface 33.

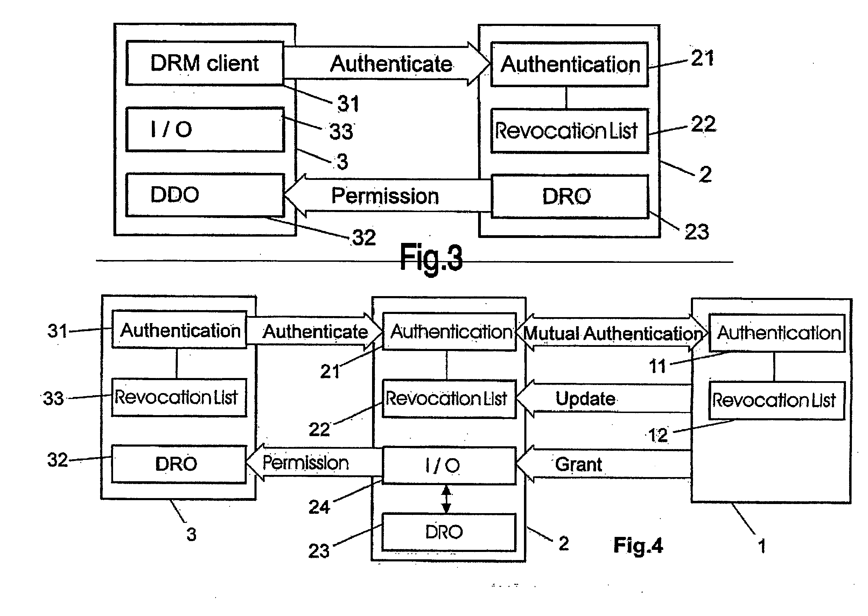

The operation of the DRM system can be seen from Figs. 2 and 3. In Fig. 2 the transfer of a DRO from the DRM sever unit 1 to the DRM user unit 2 is shown. In order for the DRM user unit 2 to obtain a DRO and for the DRM server unit 1 to possibly update the authentication algorithm and the revocation list, a mutual authentication between the DRM user unit 2 and the DRM server unit 1 has to be traded out. Especially the DRM server unit 1 checks if the DRM user unit 2 is recorded in the revocation list stored in the revocation list storage 12. After a successful authentication, several actions are possible, such as grant of digital rights object, update of authentication algorithm, or update of the revocation list stored in the revocation list storage 22 of the DRM user unit 2.

After the transactions between the DRM server unit 1 and the DRM user unit 2, the DRM user unit 2 contains the current version of the authentication algorithm and revocation list and a valid set of digital rights objects. The use of a DRO is managed by the DRM user unit 2 autonomously.

In Fig. 3 the use of a digital rights object is shown. The key functionality of the DRM user unit 2 is that it can grant the permission to use a specific DDO to different DRM client units 3, but preferably not to more than one at a time. As a first step the DRM client 31 of the DRM client unit 3 has to authenticate itself to the DRM user unit 2. The DRM user unit 2 checks with e.g. a challenge-response handshake if the DRM client 31 of the DRM client unit 3 is a valid client. In a next step the revocation list is checked whether the specific DRM client 31 is listed there. After a successful authentication of the DRM client unit 3, a permission of the use of a DDO can be granted to the DRM client unit 3, depending on the restrictions and limitations of the DRO.

An alternative operation of the DRM system is required in the case that the digital rights objects are non-transferable. In this case the DRO is bound not only to a specific DRM user unit 3, but also to a specific DRM client 31. The related operation scheme is depicted in Fig. 4. The difference to the scheme shown in Fig. 3 is that not only a mutual authentication of the DRM user unit 2 and the DRM server unit 1 is required, but that also the DRM client 31 of the DRM client unit 3 has to authenticate itself to the DRM server unit 1 through the DRM user unit 2. The use of the DRO that is issued afterwards by the DRM server unit 1 to the DRM user unit 2 is restricted to the one DRM client 31 that has authenticated itself successfully to the DRM server unit 1.

Further, an additional rights interface 24 of the DRM user unit 2 is shown in Fig. 4 which serves for receiving digital rights objects from the DRM server unit 1 to which the DRM user unit 2 has authenticated and for granting usage rights for the use of a digital data object stored on an authenticated DRM client unit 3.

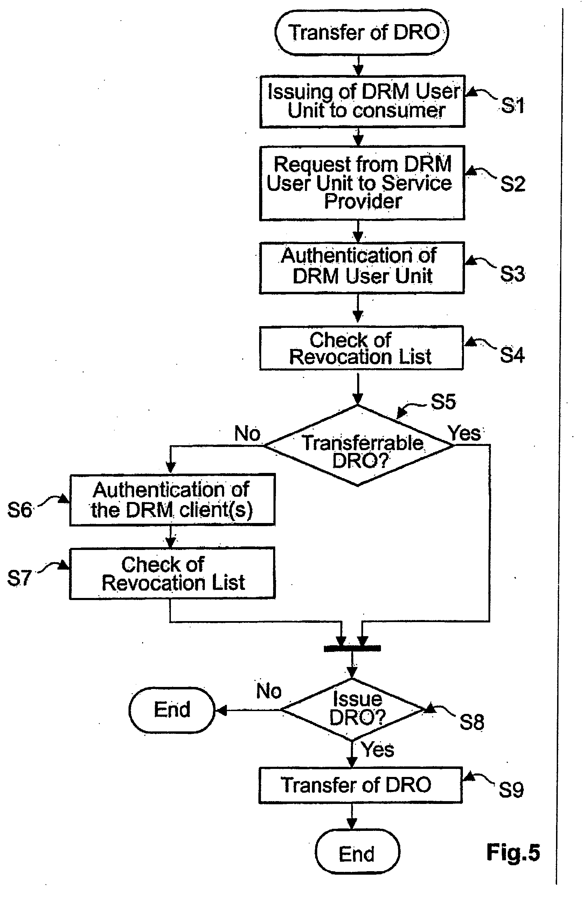

A flow chart of an embodiment of a DRM method according to the invention for issuing of a DRO to a DRM client is illustrated in Fig. 5. In step S1 the DRM user unit 2 is issued to the consumer. In step S2 the consumer uses the DRM user unit 2 to issue a request for a DRO to a service provider, in particular to the DRM server unit 1 of the service provider. The service provider checks the identity of the DRM user unit 2 in step S3 and a revocation list in step S4.

If the requested DRO is a transferable DRO, then it continues with step S8. In this step the decision is made whether or not the DRO is issued to the DRM user unit 2. If a negative decision is made, the scheme ends; in case a positive decision is made the scheme continues with step S9 where the DRO is transferred to the DRM user unit 2.

In case that the requested DRO is non-transferable, the security level of the transaction is increased: The DRM user unit 2 has to provide one fixed identity of an DRM client 31 to the service provider. This identity of the DRM client 31 is checked by the service provider in the steps S6. In step S7 a revocation list is checked with respect to the DRM client 31. After the checks the decision is made whether the DRO is going to be submitted to the DRM user unit 2 and the DRM client unit 3. Then the scheme continues in case of a positive decision with the step S9 and ends afterwards.

The DRM user unit can be implemented by any portable electronic unit that contains a secure storage and a processing unit (for authentication) and, preferably, a suitable interface. Two instances of the DRM user unit are described here in more detail.

The DRM user unit can be represented by a smart card. In this case the DRM user unit does not have an own user interface, so for any operation that requires a user interaction, the smart card has to be linked to a device that can handle the user I/O. Primarily there are three different devices that will be used as I/O devices for a smart card that functions as DRM user unit:
1) The DRM client unit: In this case the DRM user unit gets the user I/O through the interfaces of the playback equipment. The DRM user unit may be used by the DRM client unit for e.g. the playback of a DDO, but also the user may download additional digital rights objects through the DRM client unit in case the DRM client unit has a suitable network connection.
2) A mobile terminal: In this case the mobile terminal, e.g. a mobile phone, can provide all elements that are needed in addition to the smart card for a complete system in the user domain. The terminal has its own user interface, a network connection for obtaining additional digital rights objects, and also a DRM client can be present in case the terminal can function as an output device for A/V data.
3) A stationary terminal at a prominent location like a concert hall, a library, a record shop, a filling station, a supermarket or other places. This kind of terminal is employed by the user for the download of additional DRO.

A smart card as a DRM user unit can interact with a terminal or the DRM client unit via a contact or a contactless interface. The DRM user unit can also be a PCMCIA Card containing a smart card controller. In the PCMCIA card an additional small form factor smart card can be inserted.

The DRM user unit can also be represented by a mobile terminal. In this case the DRM user unit contains all necessary interfaces to download and manage the DRO. In addition, the mobile terminal can function as a DRM client unit, e.g. as a MP3 player or an MPEG4 video playback device. The mobile terminal must contain a secure processing and storage unit in order to guarantee the integrity of the DRM system. The interfacing between the mobile terminal as the DRM user unit and a DRM client unit will preferably be a contactless interface like e.g. ISO 14443 or NFC (near field communication).

The following usage scenarios outline the possible use of a DRM user unit mostly on the base of an NFC enabled mobile terminal. The handling of the DRO can be implemented on smart cards as well, but the use of an NFC device brings additional functionality to the system.

In a first usage scenario the consumer goes to a record shop to buy records. In the store he enjoys a sample track of a particular recording of music. The consumer decides to buy this recording. Along with conventional CDs and SACDs the record store offers as well to buy digital rights objects for the selected recordings. Since this option is offered at 2/3 of the price of the CD, the consumer chooses to get a DRO for the selected recording. The consumer goes to a terminal at the record store and puts his mobile phone based DRM user unit in the interaction area of the contactless reader of the terminal. The mobile phone and the terminal use their NFC interfaces for the subsequent transactions. The consumer selects the desired recording and pays the DRO with the credit card applet that is also stored on his mobile terminal. In addition the consumer is offered to download a compressed version of the recording he just bought as a digital data object into his mobile phone at no additional cost. The interface for this download can be e.g. 802.11, FastNFC or USB. The DDO of the recording is protected and can only be used with a suitable DRO. At home the consumer downloads a larger file with a high definition version of the same recording. Both DDOs can be used with the same DRO. The consumer now possesses a transferable digital rights object of the recording, so he can enjoy it in a compressed version on his mobile phone as well as in a high quality representation on his stereo set at home.

In a further usage scenario the consumer watches a broadcast of an impressing concert at home. At the end of the performance the broadcaster shows an advertisement, stating that for a very special price a non-transferable limited DRO of the performance with 5 presentation times can be purchased online. The consumer wants to take advantage of this special offer and connects his stereo system via the NFC interface and GSM connection of his mobile phone to the DRM server of the provider. The DRM server authenticates both, the DRM user unit (mobile terminal) as well as the DRM client (stereo set). After the successful authentication and a payment via the VISA applet of the mobile phone, the DRO for the concert is transferred to the mobile phone. This particular DRO can be used only in conjunction with the specific stereo set (non-transferable DRO).

In another usage scenario the consumer is on a business trip. His rental car is equipped with a generic cradle for mobile phones, this cradle also features an NFC interface to the car stereo system. The consumer puts his mobile terminal into the cradle for a hands free operation of the phone and to enable the car stereo set to use the digital rights objects stored in his mobile phone. After selection of a particular recording the car stereo system retrieves the recording as a stream of compressed data from a network server. The car stereo system decompresses and plays back the music. The service to receive compressed DDOs from a network server is part of the consumer's mobile phone subscriber package.

During the business trip the consumer stays in a hotel room with a Pay-TV system. Fortunately the system features an open interface to use personal subscriptions during the stay in the hotel. Knowing that, the consumer took his subscription card, the DRM user unit, for watching a particular film along and can now watch this film as he would do at home.

In a further usage scenario the consumer wants to be able to play back a particular recording at realistic levels, but his current equipment is not capable of delivering this without distortions, so he decides to upgrade his system. The consumer goes to a shop for a test session, and after hearing some sample tracks he requests to hear a special recording. The shop does not own the recording, but by the use of the high speed connection of the shop, a high resolution DDO of the recording can be downloaded into the storage device of the equipment of the store. The particular DDO can be played back at the shop with the use of the DRM user unit that the consumer possesses.

According to the present invention the authentication of a DRM client is relocated to the DRM user unit that is possessed by an end user. This has the advantage that now a digital rights objects is a personal license that can be used with more than one playback device / playback system while guaranteeing that no illegal copies in any form can be made of the purchased content. A service provider may now implement his own specific software routines in the DRM user unit to authenticate the DRM client running on the DRM client unit of the user.

## Claims

1. Digital rights management (DRM) user unit for interacting with DRM client units (3) and DRM server units (1) of a DRM system, said DRM client units (3) storing digital data objects (DDO) and said DRM server units (1) issuing digital rights objects (DRO) representing usage rights of associated digital data objects, comprising:
- an authentication unit (21) for authentication of the DRM user unit (2) to a DRM server unit (1) and for authentication of a DRM client unit (1) to the DRM user unit (2),
- a rights storage unit (23) for storing digital rights objects received from a DRM server unit (1), wherein said digital rights objects include an access information which DRM client units (3) shall get access to a digital rights objects, said access information being checked by the DRM user unit (2) after authentication of a DRM client (31) requesting access to said digital rights object,
wherein said digital rights objects can be accessed by an authenticated DRM client unit (3) to get usage rights for the usage of an associated digital data object stored on said DRM client unit (3), and **characterized in that** it further comprises
- an additional portable memory unit for storing, as a backup copy, at least part of the digital rights objects or a copy of the digital rights objects stored in said rights storage unit (23), wherein the DRM user unit (2) is adapted to check the presence of said portable memory unit that stores said backup copy before an access to said digital rights objects on said rights storage unit (23) is granted,
wherein the DRM user unit is formed as a unit which can have the additional portable memory unit inserted, wherein the information in the portable memory unit is sufficient to determine the rights in the DRM user unit, and is not sufficient to set up a working second DRM user unit with the same rights.

2. DRM user unit as claimed in claim 1, further comprising:
a rights interface unit (24) for receiving digital rights objects from a DRM server unit (1) to which the DRM user unit (2) has authenticated and for granting usage rights for the use of a digital data object stored on an authenticated DRM client unit (3) and associated with a digital rights object stored in said rights storage unit (23).

3. DRM user unit as claimed in claim 1, further comprising:
a revocation list storage unit (22) for storing a revocation list of DRM client units (3), said revocation list being checked by said authentication unit(21) during authentication of a DRM client unit (3).

4. DRM user unit as claimed in claim 1,
wherein said DRM user unit (2) is a portable electronic device, in particular a smart card, a PCMCIA card or a mobile terminal, such as a mobile audio and/or video player, a mobile phone or a PDA.

5. DRM user unit as claimed in claim 1,
wherein said digital rights objects include an transfer indicator indicating to which DRM client unit or client units the digital rights object is bound and if grant of a digital rights object is transferable to all DRM client units (3) or not, and wherein said authentication unit is adapted for authenticating to the DRM server unit (1) the DRM client unit (3) requesting access to a non-transferable digital rights object to the DRM server unit (1).

6. Digital rights management (DRM) system comprising:
- DRM client units (3) for storing digital data objects (DDO),
- DRM server units (1) for issuing digital rights objects (DRO) representing usage rights of associated digital data objects, and
- DRM user units (2) for interacting with said DRM client units (3) and said DRM server units (1) comprising:
an authentication unit(21) for authentication of the DRM user unit (2) to a DRM server unit and for authentication of a DRM client unit (3) to the DRM user unit (2),
a rights storage unit (23) for storing digital rights objects received from a DRM server unit (1), wherein said digital rights objects include an access information which DRM client units (3) shall get access to a digital rights objects, said access information being checked by the DRM user unit (2) after authentication of a DRM client (31) requesting access to said digital rights object, wherein said digital rights objects can be accessed by an authenticated DRM client unit (3) to get usage rights for the usage of an associated digital data object stored on said DRM client unit (3), and **characterized by**
an additional portable memory unit for storing, as a backup copy, at least part of the digital rights objects or a copy of the digital rights objects stored in said rights storage unit (23), wherein the DRM user unit (2) is adapted to check the presence of said portable memory unit that stores said backup copy before an access to said digital rights objects on said rights storage unit (23) is granted, wherein the DRM user unit is formed as a unit which can have the additional portable memory unit inserted, wherein the information in the portable memory unit is sufficient to determine the rights in the DRM user unit, and is not sufficient to set up a working second DRM user unit with the same rights.

7. Digital rights management (DRM) method for use in a DRM system, said DRM system comprising DRM client units (3) for storing digital data objects (DDO), DRM server units (1) for issuing digital rights objects (DRO) representing usage rights of associated digital data objects and DRM user units (2) for interacting with said DRM client units (3) and said DRM server units (1), said method comprising the steps of:
- authentication of a DRM user unit (2) to a DRM server unit (1),
- transfer of a requested digital rights object from said DRM server unit (1) to said DRM user unit (2) after successful authentication,
- authentication of a DRM client unit (3) to said DRM user unit (2), wherein said digital rights objects include an access information which DRM client units (3) shall get access to a digital rights objects, said access information being checked by the DRM user unit (2) after authentication of a DRM client (31) requesting access to said digital rights object,
- transfer of usage rights from said DRM user unit (2) to said DRM client unit (3) after successful authentication for the usage of an associated digital data object stored on said DRM client unit (3), and said method further **characterized by** a step of
- provision of an additional portable memory unit in the DRM user units (2) for storing, as a backup copy, at least part of the digital rights objects or a copy of the digital rights objects stored in a rights storage unit (23) in the DRM user units (2), the presence of said portable memory unit that stores said backup copy being checked before an access to said digital rights objects on said rights storage unit (23) is granted, wherein the DRM user unit is formed as a unit which can have the additional portable memory unit inserted, wherein the information in the portable memory unit is sufficient to determine the rights in the DRM user unit, and is not sufficient to set up a working second DRM user unit with the same rights.

## Patentansprüche

1. Digitalrechteverwaltungs-(DRM)-Benutzereinheit zur Interaktion mit DRM-Client-Einheiten (3) und DRM-Server-Einheiten (1) eines DRM-Systems, wobei besagte DRM-Client-Einheiten (3) Digitaldatenobjekte (DDO) speichern und besagte DRM-Server-Einheiten (1) Digitalrechteobjekte (DRO), die Benutzungsrechte von zugehörigen Digitaldatenobjekten darstellen, ausgeben, umfassend:
- eine Authentisierungseinheit (21) zum Authentisieren der DRM-Benutzereinheit (2) gegenüber einer DRM-Server-Einheit (1) und zum Authentisieren einer DRM-Client-Einheit (3) gegenüber der DRM-Benutzereinheit (2),
- eine Rechtespeichereinheit (23) zum Speichern von aus einer DRM-Server-Einheit (1) empfangenen Digitalrechteobjekten, wobei besagte Digitalrechteobjekte eine Zugriffsinformation darüber einschließen, welche DRM-Client-Einheiten (3) Zugriff auf ein Digitalrechteobjekt erhalten sollen, wobei besagte Zugriffsinformation nach der Authentisierung eines DRM-Client (31), der den Zugriff auf besagtes Digitalrechteobjekt fordert, durch die DRM-Benutzereinheit (2) überprüft wird, wobei auf besagte Digitalrechteobjekte durch eine authentisierte DRM-Client-Einheit (3) zugegriffen werden kann, um Benutzungsrechte für die Benutzung eines zugehörigen Digitaldatenobjektes, das in besagter DRM-Client-Einheit (3) gespeichert ist, zu erlangen, und **dadurch gekennzeichnet, dass** sie ferner umfasst:
- eine zusätzliche transportable Speichereinheit zum Speichern zumindest eines Teils der Digitalrechteobjekte oder einer Kopie der in besagter Rechtespeichereinheit (23) gespeicherten Digitalrechteobjekte in Form einer Sicherungskopie, wobei die DRM-Benutzereinheit (2) so ausgelegt ist, dass sie das Vorhandensein besagter transportabler Speichereinheit, die besagte Sicherungskopie speichert, überprüft, bevor ein Zugriffaufbesagte Digitalrechteobjekte in besagter Rechtespeichereinheit (23) gewährt wird, wobei die DRM-Benutzereinheit als eine Einheit ausgebildet ist, in die die zusätzliche transportable Speichereinheit eingeführt werden kann, wobei die Informationen in der transportablen Speichereinheit dazu ausreichen, die Rechte in der DRM-Benutzereinheit zu bestimmen, und nicht dazu ausreichen, eine funktionierende zweite DRM-Benutzereinheit mit den gleichen Rechten einzurichten.

2. DRM-Benutzereinheit nach Anspruch 1, ferner umfassend:
eine Rechteschnittstelleneinheit (24) zum Empfangen von Digitalrechteobjekten aus einer DRM-Server-Einheit (1), gegenüber der sich die DRM-Benutzereinheit (2) authentisiert hat, und zum Gewähren von Benutzungsrechten für die Benutzung eines Digitaldatenobjektes, das in einer authentisierten DRM-Client-Einheit (3) gespeichert ist und zu einem Digitalrechteobj ekt gehört, das in besagter Rechtespeichereinheit (23) gespeichert ist.

3. DRM-Benutzereinheit nach Anspruch 1, ferner umfassend:
eine Widerruflisten-Speichereinheit (22) zum Speichern einer Widerrufliste von DRM-Client-Einheiten (3), wobei besagte Widerrufliste durch besagte Authentisierungseinheit (21) während der Authentisierung einer DRM-Client-Einheit (3) überprüft wird.

4. DRM-Benutzereinheit nach Anspruch 1, wobei besagte DRM-Benutzereinheit (2) ein transportables elektronisches Gerät, insbesondere eine Chipkarte, eine PCMCIA-Karte oder ein mobiles Endgerät, zum Beispiel ein mobiles Audio- und/oder Videoabspielgerät, ein Mobiltelefon oder ein PDA, ist.

5. DRM-Benutzereinheit nach Anspruch 1, wobei besagte Digitalrechteobjekte einen Übertragungsanzeiger einschließen, der anzeigt, an welche DRM-Client-Einheit/en das Digitalrechteobjekt gebunden ist und ob die Gewährung eines Digitalrechteobjektes an alle DRM-Client-Einheiten (3) übertragbar ist oder nicht, und wobei besagte Authentisierungseinheit so ausgelegt ist, dass sie die DRM-Client-Einheit (3), die den Zugriff auf ein nicht-übertragbares Digitalrechteobjekt fordert, gegenüber der DRM-Server-Einheit (1) authentisiert.

6. Digitalrechteverwaltungs-(DRM)-System, umfassend:
- DRM-Client-Einheiten (3) zum Speichern von Digitaldatenobjekten (DDO),
- DRM-Server-Einheiten (1) zum Ausgeben von Digitalrechteobjekten (DRO), die Benutzungsrechte von zugehörigen Digitaldatenobjekten darstellen, und
- DRM-Benutzereinheiten (2) zur Interaktion mit besagten DRM-Client-Einheiten (3) und besagten DRM-Server-Einheiten (1), umfassend:
- eine Authentisierungseinheit (21) zum Authentisieren der DRM-Benutzereinheit (2) gegenüber einer DRM-Server-Einheit und zum Authentisieren einer DRM-Client-Einheit (3) gegenüber der DRM-Benutzereinheit (2),
- eine Rechtespeichereinheit (23) zum Speichern von aus einer DRM-Server-Einheit (1) empfangenen Digitalrechteobjekten, wobei besagte Digitalrechteobjekte eine Zugriffsinformation darüber einschließen, welche DRM-Client-Einheiten (3) Zugriff auf ein Digitalrechteobjekt erhalten sollen, wobei besagte Zugriffsinformation nach der Authentisierung eines DRM-Client (31), der den Zugriff auf besagtes Digitalrechteobjekt fordert, durch die DRM-Benutzereinheit (2) überprüft wird, wobei auf besagte Digitalrechteobjekte durch eine authentisierte DRM-Client-Einheit (3) zugegriffen werden kann, um Benutzungsrechte für die Benutzung eines zugehörigen Digitaldatenobjektes, das in besagter DRM-Client-Einheit (3) gespeichert ist, zu erlangen, und **gekennzeichnet durch**
- eine zusätzliche transportable Speichereinheit zum Speichern zumindest eines Teils der Digitalrechteobjekte oder einer Kopie der in besagter Rechtespeichereinheit (23) gespeicherten Digitalrechteobjekte in Form einer Sicherungskopie, wobei die DRM-Benutzereinheit (2) so ausgelegt ist, dass sie das Vorhandensein besagter transportabler Speichereinheit, die besagte Sicherungskopie speichert, überprüft, bevor ein Zugriffaufbesagte Digitalrechteobjekte in besagter Rechtespeichereinheit (23) gewährt wird, wobei die DRM-Benutzereinheit als eine Einheit ausgebildet ist, in die die zusätzliche transportable Speichereinheit eingeführt werden kann, wobei die Informationen in der transportablen Speichereinheit dazu ausreichen, die Rechte in der DRM-Benutzereinheit zu bestimmen, und nicht dazu ausreichen, eine funktionierende zweite DRM-Benutzereinheit mit den gleichen Rechten einzurichten.

7. Digitalrechteverwaltungs-(DRM)-Verfahren zur Verwendung in einem DRM-System, wobei besagtes DRM-System DRM-Client-Einheiten (3) zum Speichern von Digitaldatenobjekten (DDO), DRM-Server-Einheiten (1) zum Ausgeben von Digitalrechteobjekten (DRO), die Benutzungsrechte von zugehörigen Digitaldatenobjekten darstellen, und DRM-Benutzereinheiten (2) zur Interaktion mit besagten DRM-Client-Einheiten (3) und besagten DRM-Server-Einheiten (1) umfasst, wobei besagtes Verfahren die folgenden Schritte umfasst:
- Authentisierung einer DRM-Benutzereinheit (2) gegenüber einer DRM-Server-Einheit (1),
- Übertragung eines angeforderten Digitalrechteobjektes von besagter DRM-Server-Einheit (1) auf besagte DRM-Benutzereinheit (2) nach erfolgreicher Authentisierung,
- Authentisierung einer DRM-Client-Einheit (3) gegenüber besagter DRM-Benutzereinheit (2), wobei besagte Digitalrechteobjekte eine Zugriffsinformation darüber einschließen, welche DRM-Client-Einheiten (3) Zugriff auf ein Digitalrechteobjekt erhalten sollen, wobei besagte Zugriffsinformation nach der Authentisierung eines DRM-Client (31), der den Zugriff auf besagtes Digitalrechteobjekt fordert, durch die DRM-Benutzereinheit (2) überprüft wird,
- Übertragung von Benutzungsrechten von besagter DRM-Benutzereinheit (2) auf besagte DRM-Client-Einheit (3) nach erfolgreicher Authentisierung zur Benutzung eines zugehörigen Digitaldatenobjektes, das in besagter DRM-Client-Einheit (3) gespeichert ist, und wobei besagtes Verfahren ferner durch folgenden Schritt **gekennzeichnet** ist:
- Bereitstellung einer zusätzlichen transportablen Speichereinheit in den DRM-Benutzereinheiten (2) zum Speichern zumindest eines Teils der Digitalrechteobjekte oder einer Kopie der in einer Rechtespeichereinheit (23) in den DRM-Benutzereinheiten (2) gespeicherten Digitalrechteobjekte in Form einer Sicherungskopie, wobei das Vorhandensein besagter transportabler Speichereinheit, die besagte Sicherungskopie speichert, überprüft wird, bevor ein Zugriff auf besagte Digitalrechteobjekte in besagter Rechtespeichereinheit (23) gewährt wird, wobei die DRM-Benutzereinheit als eine Einheit ausgebildet ist, in die die zusätzliche transportable Speichereinheit eingeführt werden kann, wobei die Informationen in der transportablen Speichereinheit dazu ausreichen, die Rechte in der DRM-Benutzereinheit zu bestimmen, und nicht dazu ausreichen, eine funktionierende zweite DRM-Benutzereinheit mit den gleichen Rechten einzurichten.

## Revendications

1. Unité d'utilisateur de gestion de droits numériques (DRM) pour interagir avec des unités de client DRM (3) et des unités de serveur DRM (1) d'un système DRM, lesdites unités de client DRM (3) stockant des objets de données numériques (DDO) et lesdites unités de serveur DRM (1) émettant des objets de droits numériques (DRO) représentant des droits d'utilisation d'objets de données numériques associés, comprenant :
- une unité d'authentification (21) pour l'authentification de l'unité d'utilisateur DRM (2) pour une unité de serveur DRM (1) et pour l'authentification d'une unité de client DRM (1) pour l'unité d'utilisateur DRM (2),
- une unité de stockage de droits (23) pour stocker des objets de droits numériques reçus à partir d'une unité de serveur DRM (1), où lesdits objets de droits numériques comprennent une information d'accès que des unités de client DRM (3) devront obtenir pour accéder à un objet de droits numériques, ladite information d'accès étant vérifiée par l'unité d'utilisateur DRM (2) après authentification d'un client DRM (31) demandant l'accès au dit objet de droits numériques, où lesdits objets de droits numériques peuvent être accédés par une unité de client DRM authentifiée (3) pour obtenir des droits d'utilisation pour l'utilisation d'un objet de données numériques associé stocké dans ladite unité de client DRM (3), et **caractérisée en ce qu'**elle comprend en outre :
- une unité de mémoire portable additionnelle pour stocker, comme une copie de sauvegarde, au moins une partie des objets de droits numériques ou une copie des objets de droits numériques stockés dans ladite unité de stockage de droits (23), où l'unité d'utilisateur DRM (2) est adaptée pour vérifier la présence de ladite unité de mémoire portable qui stocke ladite copie de sauvegarde avant qu'un accès auxdits objets de droits numériques sur ladite unité de stockage de droits (23) soit accordé, où l'unité d'utilisateur DRM est formée comme une unité qui peut avoir l'unité de mémoire portable additionnelle insérée, où les informations dans l'unité de mémoire portable sont suffisantes pour déterminer les droits dans l'unité d'utilisateur DRM et ne sont pas suffisantes pour configurer une deuxième unité d'utilisateur DRM en service avec les mêmes droits.

2. Unité d'utilisateur DRM selon la revendication 1, comprenant en outre :
une unité d'interface de droits (24) pour recevoir des objets de droits numériques à partir d'une unité de serveur DRM (1) à laquelle l'unité d'utilisateur DRM (2) s'est authentifiée et pour accorder des droits d'utilisation pour l'utilisation d'un objet de données numériques stocké sur une unité de client DRM authentifiée (3) et associé à un objet de droits numériques stocké dans ladite unité de stockage de droits (23).

3. Unité d'utilisateur DRM selon la revendication 1, comprenant en outre :
une unité de stockage de liste de révocation (22) pour stocker une liste de révocation d'unités de clients DRM (3), ladite liste de révocation étant vérifiée par ladite unité d'authentification (21) durant l'authentification d'une unité de client DRM (3).

4. Unité d'utilisateur DRM selon la revendication 1,
dans laquelle ladite unité d'utilisateur DRM (2) est un dispositif électronique portable, en particulier une carte à puce, une carte PCMCIA ou un terminal mobile, tel qu'un lecteur mobile audio et/ou vidéo, un téléphone mobile ou un assistant personnel de communication.

5. Unité d'utilisateur DRM selon la revendication 1,
dans laquelle lesdits objets de droits numériques comprennent un indicateur de transfert indiquant à quelle unité ou quelles unités de client DRM l'objet de droits numériques est lié et si une concession d'un objet de droits numériques est ou non transférable à toutes les unités de client DRM (3), et dans laquelle ladite unité d'authentification est adaptée pour authentifier pour l'unité de serveur DRM (1) l'unité de client DRM (3) demandant l'accès à un objet de droits numériques non transférable à l'unité de serveur DRM (1).

6. Système de gestion de droits numériques (DRM) comprenant :
- des unités de client DRM (3) pour stocker des objets de données numériques (DDO),
- des unités de serveur DRM (1) pour émettre des objets de droits numériques (DRO) représentant des droits d'utilisation d'objets de données numériques associés, et
- des unités d'utilisateur DRM (2) pour interagir avec lesdites unités de client DRM (3) et lesdites unités de serveur DRM (1) comprenant :
une unité d'authentification (21) pour l'authentification de l'unité d'utilisateur DRM (2) pour une unité de serveur DRM et pour l'authentification d'une unité de client DRM (3) pour l'unité d'utilisateur DRM (2),
une unité de stockage de droits (23) pour stocker des objets de droits numériques reçus à partir d'une unité de serveur DRM (1), où lesdits objets de droits numériques
comprennent une information d'accès que des unités de client DRM (3) devront obtenir pour accéder à un objet de droits numériques, ladite information d'accès étant
vérifiée par l'unité d'utilisateur DRM (2) après authentification d'un client DRM (31) demandant l'accès au dit objet de droits numériques, où lesdits objets de droits numériques peuvent être accédés par une unité de client DRM authentifiée (3) pour obtenir des droits d'utilisation pour l'utilisation d'un objet de données numériques associé stocké dans ladite unité de client DRM (3), et **caractérisé par**
une unité de mémoire portable additionnelle pour stocker, comme une copie de sauvegarde, au moins une partie des objets de droits numériques ou une copie des objets de droits numériques stockés dans ladite unité de stockage de droits (23), où l'unité d'utilisateur DRM (2) est adaptée pour vérifier la présence de ladite unité de mémoire portable qui stocke ladite copie de sauvegarde avant qu'un accès auxdits objets de droits numériques sur ladite unité de stockage de droits (23) soit accordé, où l'unité d'utilisateur DRM est formée comme une unité qui peut avoir l'unité de mémoire portable additionnelle insérée, où les informations dans l'unité de mémoire portable sont suffisantes pour déterminer les droits dans l'unité d'utilisateur DRM et
ne sont pas suffisantes pour configurer une deuxième unité d'utilisateur DRM en service avec les mêmes droits.

7. Procédé de gestion de droits numériques (DRM) pour l'utilisation dans un système DRM, ledit système DRM comprenant des unités de client DRM (3) pour stocker des objets de données numériques (DDO), des unités de serveur DRM (1) pour émettre des objets de droits numériques (DRO) représentant des droits d'utilisation d'objets de données numériques associés et des unités d'utilisateur DRM (2) pour interagir avec lesdites unités de client DRM (3) et lesdites unités de serveur DRM (1), ledit procédé comprenant les étapes :
- d'authentification d'une unité d'utilisateur DRM (2) pour une unité de serveur DRM (1),
- de transfert d'un objet de droits numériques demandé de ladite unité de serveur DRM (1) à ladite unité d'utilisateur DRM (2) après authentification réussie,
- d'authentification d'une unité de client DRM (3) pour ladite unité d'utilisateur DRM (2), où lesdits objets de droits numériques comprennent une information d'accès que des unités de client DRM (3) devront obtenir pour accéder à un objet de droits numériques, ladite information d'accès étant vérifiée par l'unité d'utilisateur DRM (2) après authentification d'un client DRM (31) demandant l'accès au dit objet de droits numériques,
- de transfert de droits d'utilisation de ladite unité d'utilisateur DRM (2) à ladite unité de client DRM (3) après authentification réussie pour l'utilisation d'un objet de données numériques associé stocké dans ladite unité de client DRM (3), et ledit procédé étant **caractérisé en outre par** une étape de :
- fourniture d'une unité de mémoire portable additionnelle dans les unités d'utilisateur DRM (2) pour stocker dans les unités d'utilisateur DRM (2), comme une copie de sauvegarde, au moins une partie des objets de droits numériques ou une copie des objets de droits numériques stockés dans ladite unité de stockage de droits (23), la présence de ladite unité de mémoire portable qui stocke ladite copie de sauvegarde étant vérifiée avant qu'un accès auxdits objets de droits numériques sur ladite unité de stockage de droits (23) soit accordé, où l'unité d'utilisateur DRM est formée comme une unité qui peut avoir l'unité de mémoire portable additionnelle insérée, où les informations dans l'unité de mémoire portable sont suffisantes pour déterminer les droits dans l'unité d'utilisateur DRM et ne sont pas suffisantes pour configurer une deuxième unité d'utilisateur DRM en service avec les mêmes droits.
